# EUROPEAN PATENT APPLICATION

(11) **EP 4 765 475 A1**
(43) Date of publication of application: **24.06.2026**
(21) Application number: 25217346.3
(22) Date of filing: 20.11.2025
(51) Int. Cl.: H01Q 1/22, H01Q 3/24

(54) **ANTENNA AND CONTAINER HAVING AN ANTENNA**

(30) Priority: 23.12.2024 US 202418999756
(71) Applicant: BlackBerry Limited, Waterloo, Ontario N2K 0A7 (CA)
(72) Inventor: MAN, Ying Tong, Waterloo, ON, N2K 0A7 (CA); FULESHWAR PRASAD, Mahendra, Waterloo, ON, N2K 0A7 (CA); JANTZI, Jason Wayne, Waterloo, ON, N2K 0A7 (CA)
(74) Representative: MERH-IP Matias Erny Reichl Hoffmann Patentanwälte PartG mbB

(57) **Abstract**

Devices, systems, and operation methods of a device is provided. In one aspect, the device includes an external assembly including an external antenna and an internal assembly. The internal assembly includes an internal antenna, a transceiver, and a radio frequency (RF) switch coupled to the transceiver, the internal antenna and the external antenna. The RF switch is configured to selectively couple at least one of the external antenna or the internal antenna to the transceiver. The external antenna is coupled to the RF switch through at least one conductor.

## Description

### FIELD

The specification relates generally to antennas, and specifically to a container having an antenna.

### BACKGROUND

Radio-based tracking devices can be mounted on containers, and in particular shipping containers, to remotely track position, and the like, of the containers. Such containers are shipped and/or handled under harsh conditions and/or physically demanding conditions and may also be targets of vandalism. Hence, mounting tracking devices on an external surface of such containers can easily lead to the tracking devices being physically damaged due to harsh conditions or vandalism.

### BRIEF DESCRIPTION OF THE DRAWINGS

FIGS. 1A through 1C illustrate perspective views of example containers having at least one device.
FIGS. 2A and 2B illustrate perspective views of example devices mounted on a door of a container.
FIG. 3 illustrates a schematic diagram of an example device.
FIG. 4A illustrate an example device including a door sensor.
FIG. 4B illustrates an example location of an external assembly of an example device.
FIG. 4C illustrates another example location of an external assembly of an example device.
FIG. 5 is a flow chart of an example process to operate a device.

Like reference numbers and designations in the various drawings indicate like elements. It is also to be understood that the various example embodiments shown in the figures are merely illustrative representations and are not necessarily drawn to scale.

### DETAILED DESCRIPTION

Implementations of the present disclosure provide a device, a container with a device and methods for operating the device. In some implementations, the device includes an external assembly including an external antenna and an internal assembly. The internal assembly includes an internal antenna, a transceiver, and a radio frequency (RF) switch coupled to the transceiver, the internal antenna and the external antenna. The RF switch is configured to selectively couple at least one of the external antenna or the internal antenna to the transceiver. The external antenna is coupled to the RF switch through at least one conductor.

Implementations of the present disclosure can provide one or more of the following technical advantages and/or benefits. For example, the device includes an external assembly including one or more external antennas and an internal assembly including one or more internal antennas. The one or more internal antennas can be mounted inside the container with electrical connections to one or more external antennas mounted outside the container. The internal antenna and/or the external antenna can cover different radio access technologies (RATs), e.g., wide area network (WAN), global navigation satellite system (GNSS), Bluetooth (BT), or short-range frequency (SRF). The external antenna that is mounted outside the container can improve communication to cell towers, global positioning system (GPS) satellites and/or transmitting/receiving terminals of other RATs. In the case of tampering or vandalism event on the external antenna, the device can detect a drop in received signal (Rx signal) strength or a change in antenna impedance from the external antenna. The device can then switch to the internal antenna and communicate with a remote device (e.g., a remote server) through the internal antenna. The communication can include a report of a location of the container and/or indicate that a potential tamper event has occurred. Therefore, the device can enhance the security of assets in the container by detecting a potential tampering event and reporting the location to a remote server. The location data may help responders locate the container quickly.

Further, the device is applicable to various container designs. In some examples, the containers do not have a perfect seal around the door seams and their floors and walls can be made out of fiber glass or wood structure. RF signal can penetrate inside the container. The device can therefore report an instant event to the remote device through the internal antennas when the external antennas are damaged. In some other examples, some containers can be made out of complete steel and has a very good seal around the door. In these examples, the tampering event can be reported after the door is opened, e.g., by an intruder.

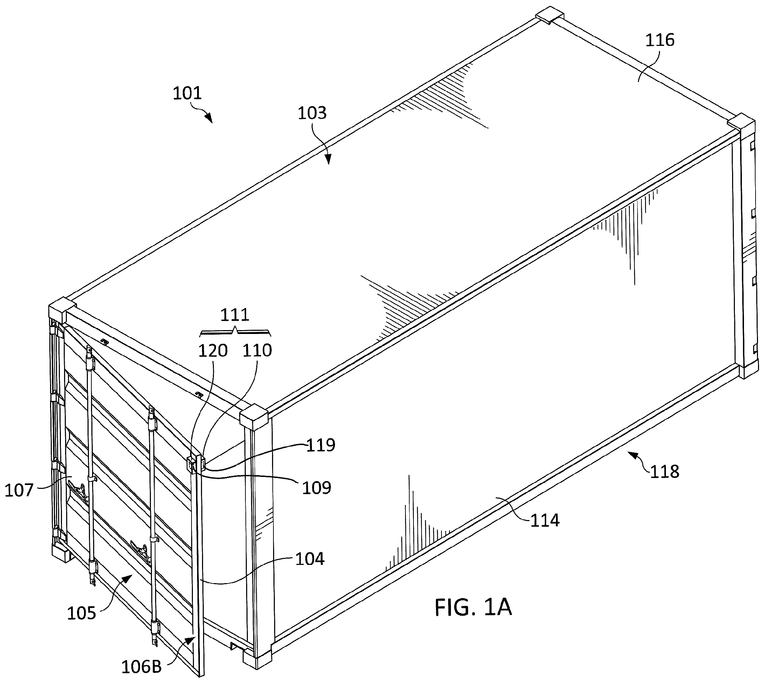

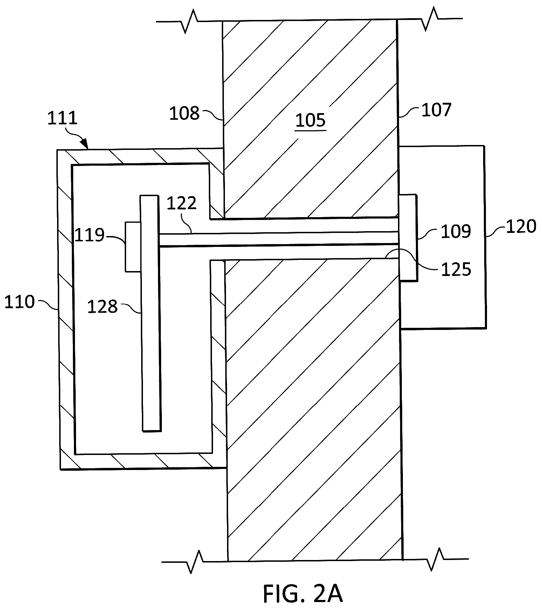

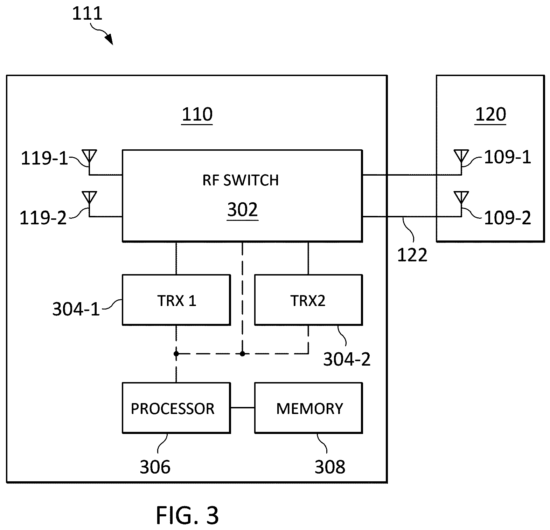

FIGS. 1A-1C illustrate perspective views of example containers 101 including one or more devices 111. A container 101 can include: a chassis 103 and a door 105 moveably mounted to chassis 103. The door 105 has an external surface 107 and an internal surface 108 (as illustrated in FIG. 2A). Container 101 further includes a device 111. The device 111 can include an external assembly 120 located at external surface 107 of door 105 and an internal assembly 110 located inside chassis 103 and, in particular, on the internal surface 108 of door 105. As described in further details below in reference to FIG. 3, the external assembly 120 includes one or more external antennas 109. The internal assembly 110 includes one or more internal antennas 119, one or more transceivers 304, and a radio frequency (RF) switch 302 coupled to the one or more transceivers 304, the one or more internal antennas 119 and the one or more external antennas 109.

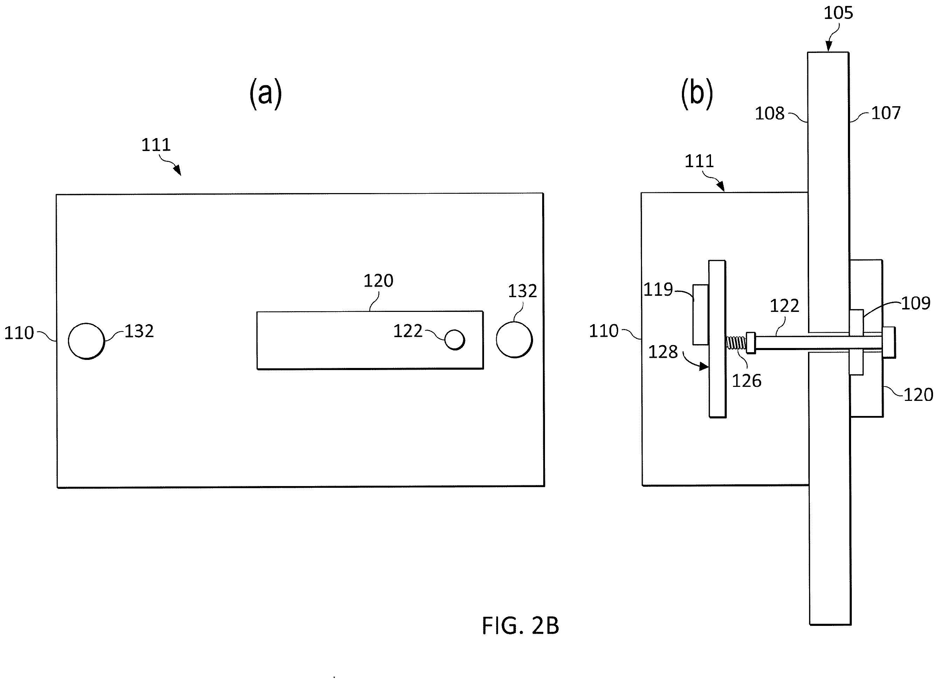

The internal assembly 110 of the device 111 can be mounted and/or attached to internal surface 108 (as illustrated in FIG. 2A) of door 105 using brackets, screws (e.g., mounting screw 132 as illustrated in FIG. 2B), mechanical devices straps, adhesives, fasteners, or any combination thereof. Similarly, the external assembly 120 of the device 111 can be mounted and/or attached to external surface 107 of door 105 using any method described above. The external surface 107 can refer to the surface that is outside the container 101, while the internal surface 108 can refer to the surface that is inside the container 101.

In some implementations, the external assembly 120 is located on a portion of the external surface 107 that is adjacent to an edge of the door 105 of the container 101, and the internal assembly 110 is located on a corresponding portion of the internal surface 108 that is adjacent to the edge of the door of the container. For example, as illustrated in FIG. 1A, the external assembly 120 can be located near the edge 104 of the door 105. Correspondingly, the internal assembly 110 can be located near the same edge 104 of the door 105 and in a portion that directly aligns with or is opposite to the portion of the external surface 107 where the external assembly 120 is located. In other words, the external assembly 120 and the internal assembly 110 can be located in the same relative position on opposite surfaces of a door 105 or any other wall of the container 101.

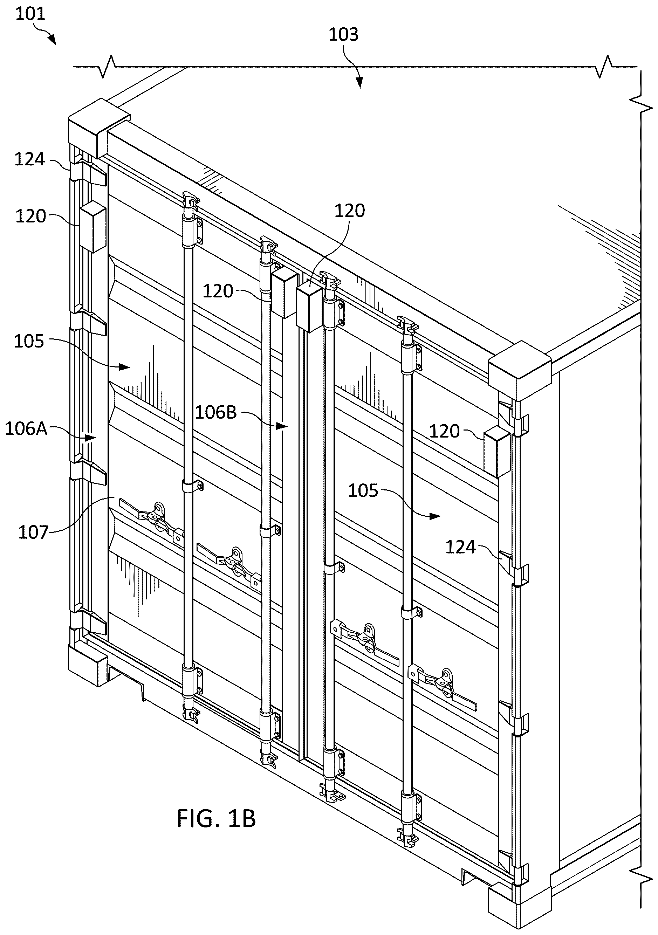

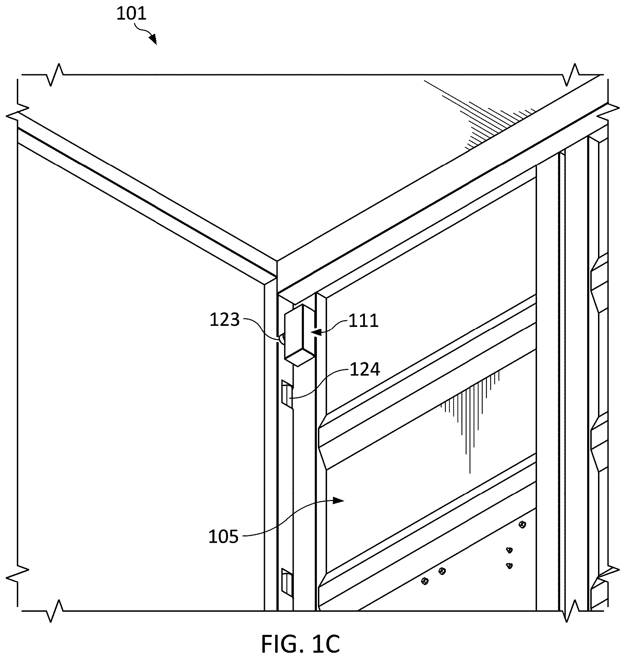

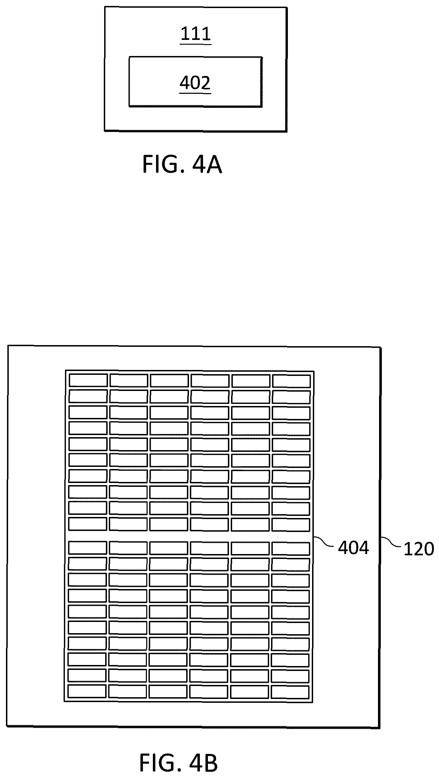

In some implementations, the device 111 is located near a door sensor and/or near a hinge 124 of the door 105, as illustrated in FIG. 1C. In some examples, the door sensor can include a magnet 123 and a magnetometer (e.g., magnetometer 402 of FIG. 4A). The magnet 123 can be positioned near the hinge 124 of the door 105, while the magnetometer 402 can be located inside the device 111. Although not shown, it is to be understood that other sensor technologies for door detection can be employed as well. In some implementations, the device 111 is located at a top corner close to the door hinge, as illustrated in FIG. 1B. In some implementations, the device 111 is located near a strike side 106B of the door 105, as illustrated in FIGS. 1A and 1B. In some implementations, each container 101 includes two or more external assemblies 120 mounted on the external surface 107, but positioned on different sides (e.g., hinger side 106A and strike side 106B) of the door 105, as illustrated in FIG. 1B.

With further reference to FIG. 1A, as depicted, container 101 can include a shipping container, and hence container 101 and/or chassis 103 is generally elongated. For example, container 101 and/or chassis 103 can include an elongated box having a longitudinal axis with four long sides forming a top, a bottom and two sides joining the top and the bottom, and two shorter and/or smaller sides and/or faces at respective opposite ends of the four long sides. However, container 101 and/or chassis 103 can be any shape compatible with containing and/or shipping goods therein.

Furthermore, while container 101 and/or chassis 103 is depicted as having generally flat sides, at least a portion of container 101 and/or chassis 103 can be at least partially corrugated and/or include ribs to ruggedize and/or provide structural integrity to container 101 and/or chassis 103. To ruggedize container 101 and/or chassis 103, at least chassis 103 can include (and/or is made of) metal including, but not limited to steel, and the like, and further the metal can be of a thickness and dimensions compatible with containing and/or shipping goods therein.

As illustrated in FIG. 1A, door 105 can be located at an end of container 101 and/or chassis 103 and in particular, a shorter and/or smaller side and/or face of container 101 and/or chassis 103. However, door 105 can be located anywhere on and/or in container 101 and/or chassis 103, including either end along the longitudinal axis, a front, a back, a top, a bottom and indeed any side of container 101 and/or chassis 103. Door 105 can be made of a material similar to chassis 103 including, but not limited to metal and/or steel.

In some implementations, door 105 is moveably mounted to chassis 103 and can move between a closed and/or locked position, in which chassis 103 is at least partially sealed to contain goods therein, and an open and/or unlocked position, such that goods can be loaded into and/or unloaded from inside chassis 103. As depicted in FIG. 1C, door 105 opens outwards and is in at least a partially open position. Hence, door 105 can include at least one mechanism, which can include, but is not limited to hinges, moveably mounting door 105 to chassis 103, as well as to enable door 105 to move between the open and closed positions. Furthermore, door 105 can alternatively open inward.

While not depicted, door 105 and/or chassis 103 can include locking devices and/or latching devices, and the like (including, but not limited to, latches, locks, and the like) for locking and/or latching door 105 into the closed position.

Furthermore, container 101 can include more than one door; for example, door 105 can be one of a pair of double doors that open outward (and/or inward) at an end of container 101 to provide access to the interior of container 101 to load and/or unload goods. Furthermore, door 105 can include a roll-up door, an overhead door, and the like.

In yet further implementations, container 101 can include a refrigerated container (and hence can include one or more air conditioning units and the like) and/or an insulated container. In these implementations, one or more of door 105 and chassis 103 can be insulated.

As depicted in FIG. 1A, the external assembly 120 that includes at least one external antenna 109 can be located at external surface 107 of door 105; however, external antenna 109 can be located at any surface of chassis 103, and in particular at any external surface of chassis 103. For example, the external antenna 109 can be located on a top surface 116 of the chassis 103, or on a side surface 114 of the chassis 103. Similarly, the internal assembly 110 that includes at least one internal antenna 119 can be located at any internal surface of the container 101, including the internal surface of chassis 103 and the internal surface 108 of the door 105 (e.g., internal surface 108 of FIG. 2A). In some implementations, as noted above, the internal antenna 119 and the external antenna 109 are located on opposite surfaces of the same wall (e.g., the side wall 118) or the door 105 of the container 101.

In some examples, it can be particularly convenient to locate external antenna 109 in external surface 107 of door 105 as, when container 101 is stacked and/or stored with other (e.g. metal) containers (which can be similar to, or different from container 101), the containers can be stacked and/or stored with respective doors being accessible. Hence, when external antenna 109 is located at external surface 107 of door 105, the possibility of external antenna 109 being located next to metal surfaces of other containers can be reduced.

FIGS. 2A-2B illustrate perspective views of an example device 111 mounted on a door 105 of a container. Diagram (a) of FIG. 2B can be a front view of the example device 111, while FIG. 2A and diagram (b) of FIG. 2B can be side views of the example device 111. The container can be any one of the containers 101 in FIGS. 1A-1C. The door 105 can be any one of the doors 105 in FIGS. 1A-1C. As illustrated in FIG. 2A, the external assembly 120 is mounted on the external surface 107 of the door 105, and the internal assembly 110 is mounted on the internal surface 108 of the door 105. The internal assembly 110 can include a printed circuit board (PCB) 128. The PCB 128 can include one or more internal antennas 119, the RF switch 302 and one or more transceivers 304, as described below in further detail with reference to FIG. 3. The external assembly 120 can include one or more external antennas 109.

In some implementations, as illustrated in FIG. 2A, the one or more external antennas 109 is coupled to the PCB 128 through at least one conductor 122 (also called antenna feed in the present disclosure). In some implementations, the at least one conductor 122 includes at least one of: a first conductor configured to convey radio frequency (RF) signals between the external antenna 109 and the PCB 128, or a second conductor configured to couple the external antenna 109 to a ground voltage. In some implementations, the at least one conductor 122 includes a conductive mounting screw and/or a coaxial cable that extends through an aperture 125 of the door 105. A conductive mounting screw can be a type of screw made from a material that allows electrical current to pass through it. It can be used to secure the external assembly 120 to the door 105 while also providing a path for electrical conductivity. The conductive mounting screws can be made of metals, e.g., brass, copper, or stainless steel. The coaxial cable (can be referred to as coax cable) can include a central conductor, an insulating layer, a shield, and/or an outer insulating layer.

In some implementations, as illustrated in FIG. 2B, the internal assembly 110 includes at least one conductive spring 126 coupled to the PCB 128. The at least one conductor 122 can be coupled to the PCB 128 through the at least one conductive spring 126. In some implementations, the at least one conductive spring 126 includes a first conductive spring including a feed point of antenna feed and a second conductive spring including a ground of antenna feed. The first conductive spring and second conductive spring can be respectively coupled to the first conductor and the second conductor.

It is to be understood that although only one conductor 122 is illustrated in FIGS. 2A and 2B, two or more conductors may be utilized. For example, the external assembly 120 can include two external antennas 109, and the internal assembly 110 can include two corresponding internal antennas 119. Each of the external antennas 109 can be coupled to two conductors: one for RF signal feed and the other one for ground. Therefore, the device 111 can have a total of four conductors 122.

As illustrated in diagram (a) of FIG. 2B, the internal assembly 110 can be mounted to the internal surface 108 of the door 105 using mounting screws 132, and the external assembly 120 can be mounted to the external surface 107 of the door 105 using conductive mounting screws (e.g., conductors 122). It is to be understood that other mounting methods can also be employed, e.g., brackets, mechanical devices straps, adhesives, fasteners, or any combination thereof, as noted above.

Attention is next directed to FIG. 3 which depicts a schematic diagram of an example device 111. The device 111 can be any one of the devices 111 in FIGS. 1A-2B. As noted above, the device 111 includes an external assembly 120 and an internal assembly 110. The external assembly 120 includes one or more external antenna 109. The internal assembly 110 includes one or more internal antenna 119, a RF switch 302 and one or more transceivers 304 corresponding to one or more RATs. Two external antennas 109-1, 109-2, two internal antennas 119-1, 119-2, and two transceivers 304-1, 304-2 are illustrated in FIG. 3. The external antennas 109-1, 109-2 can be referred to generally as external antennas 109 or individually as external antenna 109 in the present disclosure. The internal antennas 119-1, 119-2 can be referred to generally as internal antennas 119 or individually as internal antenna 119 in the present disclosure. The transceivers 304-1, 304-2 can be referred to generally as transceivers 304 or individually as transceiver 304 in the present disclosure.

Internal antennas 119 and/or external antennas 109 can include one or more of a bluetooth antenna, a cellular antenna, a wireless fidelity (WiFi) antenna, a GPS (Global Positioning System) antenna, a GLONASS (Navigazionnaya Sputnikovaya Sistema) antenna or a short-range frequency (SRF) antenna. In some implementations, the device 111 includes a plurality of external antennas 109 and a plurality of internal antennas 119. An external antenna 109 and a corresponding internal antenna 119 can form an antenna pair. In some implementations, the external antenna 109 and the corresponding internal antenna 119 in the same antenna pair is configured to transmit and receive a same set of frequencies. For example, the first external antenna 109-1 and the first internal antenna 119-1 can form a first antenna pair, and the antennas in the first antenna pair can be configured to operate in the same frequency range (e.g., a first set of frequencies corresponding to a GPS network). In another example, the second external antenna 109-2 and the second internal antenna 119-2 can form a second antenna pair, and the antennas in the second antenna pair be configured to operate in the same frequency range (e.g., a second set of frequencies corresponding to a WiFi network). In some implementations, the external antenna 109 and the corresponding internal antenna 119 in the same antenna pair have the same configuration and structure.

In some implementations, the external assembly 120 includes a plurality of external antennas 109 associated with a plurality of radio access technologies (RATs). The plurality of external antennas 109 can include the first external antenna 109-1 associated with a first RAT of the plurality of RATs and a second external antenna 109-2 associated with a second RAT of the plurality of RATs. Similarly, the internal assembly 110 can include a plurality of internal antennas 119 associated with the plurality of RATs. The plurality of internal antennas 119 can include the first internal antenna 119-1 associated with the first RAT and a second internal antenna 119-2 associated with the second RAT. For examples, the external antennas 109 can include: a first external antenna 109-1 configured to communicate with one or more location determining networks, including, but not limited to, a GPS network and/or a GLONASS network; and a second external antenna 109-2 configured to communicate with one or more communication networks, including, but not limited to, a cellular network and/or a WiFi network. Correspondingly, the internal antennas 119 can include: the first internal antenna 119-1 configured to communicate with the same network as the first external antenna 109-1; and the second internal antenna 119-2 configured to communicate with the same network as the second external antenna 109-2. Therefore, the device 111 can be configured to determine a location of container 101 (e.g., using the first internal antenna 119-1 and/or the first external antenna 109-1), and transmit the location of container 101 to a remote device (e.g., using the second internal antenna 119-2 and/or the second external antenna 109-2). The remote device can include, without limitation to, a remote server, a user device, or another wireless communication antenna.

In some implementations, the RF switch 302 is configured to selectively couple at least one of the external antenna 109 or the internal antenna 119 to a corresponding transceiver 304. For example, the first transceiver 304-1 can correspond to a first RAT, e.g., a GPS network, and the first internal antenna 119-1 and the first external antenna 109-1 can be, e.g., GPS antennas. The RF switch 302 can be configured to couple the first external antenna 109-1, the first internal antenna 119-1, or both, to the first transceiver 304-1. In another example, the second transceiver 304-2 can correspond to a second RAT, e.g., a cellular network, and the second internal antenna 119-2 and the second external antenna 109-2 can be, e.g., a cellular antenna. The RF switch 302 can be configured to couple the second external antenna 109-2, the second internal antenna 119-2, or both, to the second transceiver 304-2.

In some implementations, the RF switch 302 is configured to selectively couple at least one of the external antenna 109 or the internal antenna 119 to the transceiver 304 based on a strength of signals received by the external antenna 109 and internal antenna 119. In the present disclosure, the signal received by the external antenna 109 can be referred to as a first signal, while the signal received by the internal antenna 119 can be referred to as a second signal. The first signal and the second signal can be referred to generally as Rx signals and individually as Rx signal in the present disclosure. In some implementations, to determine the strength of signals received by the antennas, the device 111 is configured to measure at least one of received signal strength indicator (RSSI) value or global positioning system signal-to-noise ratio (GPS SNR) value for each of the first signal and the second signal. The RSSI value can be a measurement of the power level received by the device 111 from a wireless signal, and the GPS SNR value can represent the quality of the signal received from GPS satellites, measured as the ratio of the signal power to the background noise power. In some implementations, the RSSI value and/or GPS SNR value are measured by the internal assembly 110 of the device 111. In some examples, the RSSI and GPS SNR values can be measured by the transceivers 304 or any other suitable measurement circuit.

In some implementations, the device 111 is configured to compare the strength of the first signal and the second signal. In some implementations, based on the comparison, the RF switch 302 is configured to: (i) couple the external antenna 109 to the transceiver 304 responsive to the strength of the first signal received by the external antenna 109 being greater than the strength of the second signal received by the internal antenna 119, and/or (ii) couple the internal antenna 119 to the transceiver 304 responsive to the strength of the second signal received by the internal antenna 119 being greater than the strength of the first signal received by the external antenna 109. For example, the RF switch 302 can select the antenna that provides better Rx signal quality, e.g., the signal with a higher SNR ratio. In some implementations, the comparison of the Rx signals is performed by a processor of the device 111 (e.g., the processor 306 in FIG. 3). In some implementations, the comparison of the Rx signals is performed by the RF switch 302.

As noted above, during an event of container theft, antennas that are located outside the container 101 may be vandalized first. If the device 111 includes the antennas only on the outside of the container 101 (e.g., only external antennas 109, without any internal antennas 119), no theft event or GPS location will be reported to the server if the external antennas are damaged during the vandalism event. Consequently, the asset may be lost and not trackable. The implementations of the present disclosure include a device 111 that includes both internal and external antennas. In some implementations, the device 111 is configured to detect a condition associated with the external antenna 109; and in response to a detection of the condition, obtain a location of the device 111 and transmit an output signal indicative of the location of the device 111 to a remote device through the internal antenna 119. The condition associated with the external antenna 109 can be, e.g., a malfunctioning, damage or removal of the external antenna 109. When the device 111 determines an external antenna 109 is malfunctioned, damaged or removed, the device 111 can switch to (e.g., by the RF switch 302) a corresponding internal antenna 119 to continue communication with the remote device. The communication with the remote device can include sending a current location of the device 111 and/or reporting that a possible vandalism or theft event has occurred.

In some implementations, to obtain the location of the device 111, the device 111 is configured to obtain a current location of the device 111 by (i) receiving a signal from a global positioning system (GPS) satellite through a corresponding internal antenna 119, and/or (ii) retrieve a last known location of the device 111 stored in a memory of the device 111 (e.g., the memory 308 of FIG. 3). For example, if GPS satellite signals can be received by the internal antennas 119 inside the container 101, the device 111 can determine its current location by communicating with the GPS satellite through a corresponding internal antenna 119 (e.g., the first internal antenna 119-1), and then report the current location through a corresponding internal antenna 119 (e.g., the second internal antenna 119-2). In another example, if GPS satellite signal reception is weak or not available inside the container 101, the device 111 can retrieve its last known location that is stored in the memory 308 and send it to the remote device through a corresponding internal antenna 119 (e.g., the second internal antenna 119-2) for reporting.

In some implementations, the internal antenna 119 and/or the external antenna 109 are multiband antennas having one or more input ports and one or more output ports to support multiband operations. The multiband antennas can transmit and/or receive signals over different frequency bands. For example, each of the first internal antenna 119-1 and the first external antenna 109-1 can communicate with a GNSS network and a cellular network. In another example, each of the first internal antenna 119-1 and the first external antenna 109-1 can communicate with a cellular network and a BT network. In yet another example, each of the first internal antenna 119-1 and the first external antenna 109-1 can communicate with cellular network, a GNSS network, a WiFi network and a BT network. Therefore, in a vandalism event, the first internal antenna 119-1 can be used both to obtain the current location of the container 101 from the GPS network and to report that location to the remote device.

In some implementations, to detect the condition associated with the external antenna 109, the device 111 is configured to detect the decrease in the first signal strength received by the external antenna 109. In the event of tampering, the external antenna 109 may be destroyed, resulting in a low Rx signal strength. When the Rx signal strength of the external antenna 109 falls below a threshold (e.g., below a noise level), it can serve as an indicator of a tempering or vandalism incident. In some implementations, to detect the decrease in the Rx signal strength, the device 111 is configured to detect a current Rx signal strength and compare it with a reference Rx signal strength. The reference Rx signal strength can be a Rx signal strength of the external antenna 109 that has been measured at a prior occasion or an expected Rx signal strength of the external antenna 109. The reference Rx signal strength can be stored in the memory 308 of the device 111. In some implementations, to detect the decrease in the Rx signal strength, the device 111 is configured to detect a current Rx signal strength and compare it with a threshold. The threshold can be associated with a noise level or detection precision. In some implementations, the detection of signal strength is performed by a corresponding transceiver 304, while the processor 306 determines that the Rx signal strength has dropped below the reference Rx signal and/or the threshold.

In some implementations, to detect the condition associated with the external antenna 109, the device 111 is configured to detect a switching event that the RF switch 302 has switched from the external antenna 109 to the internal antenna 119. As noted above, the device 111 can be configured to detect a RSSI level or GPS SNR level for Rx signals of an antenna pair, e.g., an internal antenna 119 and a corresponding external antenna 109. In a tempering event, the damaged external antenna 109 may have low Rx signal strength, as noted above. The RF switch 302 may switch from the external antenna 109 to the internal antenna 119, as the internal antenna 119 may have a stronger signal strength. Therefore, the switching event that the RF switch 302 has switched from the external antenna 109 to the internal antenna 119 may indicate that the external antenna 109 has been damaged by a potential tempering event. In some implementations, the switching event is detected by a power detection circuit configured to measure power at outputs of the RF switch 302, by a voltage or current sending circuit configured to measure voltage or current associated with the RF switch 302, the internal antenna 119 and/or the external antenna 109, by an impedance monitoring circuit configured to measure the impedance at the outputs of the RF switch, or by any other suitable circuits.

In some implementations, to detect the condition associated with the external antenna 109, the device 111 is configured to detect a change in at least one electrical property associated with the external antenna 109, and the at least one electrical property includes at least one of impedance, power, voltage or current. For example, the device 111 can be configured to detect impedance changes associated with the external antenna 109, e.g., at the inputs and/or outputs of the external antenna 109. In some other examples, the device 111 can include an outcoupler coupled to the external antenna 109 for impedance matching, and the device 111 can be configured to detect an electrical current or voltage changes of the outcoupler. In some other examples, the device 111 can be configured to detect a power (e.g., through a power detector) or a voltage drop associated with the external antenna 109, e.g., at the inputs and/or outputs of the external antenna 109.

In some implementations, the output signal of the device 111 is further indicative of the condition of the external antenna 109. For example, the device 111 can send a detection report to the remote device, which can be indicative of details of the switching event (e.g., switching time, and/or the Rx signal strength of the external antenna 109), the decrease of the Rx signal (e.g., the magnitude of the decrease, and/or the Rx signal strength of the external antenna 109), and/or the change in at least one electrical property associated with the external antenna 109 (e.g., the specific electric property that has changed, and/or the magnitude of the change).

In some implementations, the switching event that the RF switch 302 switched from the external antenna 109 to the internal antenna 119 is a first switching event, and the device 111 is further configured to: (i) detect a second switching event that occurs within a predetermined time period after the first switching event, the second switching event being that the RF switch 302 has switched from the external antenna 109 to the internal antenna 119; and (ii) in response to a detection of the second switching event, transmit a third output signal indicative of the second switching event. In some examples, if the RF switch 302 switches back to the external antenna 109 from the internal antenna 119 shortly after the first switching event, it may indicate the external antenna 109 is not physically damaged or removed. In these examples, the device 111 can transmit another signal to the remote device to report that the prior report of a potential vandalism event triggered by the first switching event may have been a false alarm.

As noted above, in some cases, the containers 101 do not have a perfect seal around the door seams, and their floors and walls can be made out of fiber glass or wood structure. RF signal can penetrate inside the container 101. The device 111 can therefore report an instant event to the remote device (e.g., a remote server). In some other cases, some containers 101 can be made out of complete steel and has very good seal around the door. In these situations, the tampering event can be reported after the door is opened, e.g., by an intruder.

In some implementations, the device 111 also includes a processor 306, and a memory 308. In some implementations, the processor 306 and the memory 308 are within the internal assembly 110 of the device 111. The processor 306 can be electrically coupled to the one or more transceivers 304 and/or the RF switch 302. The memory 308 can be electrically coupled to the processor 306.

In some implementations, the processor 306 includes any suitable combination of processors and/or a plurality of processors, including but not limited to one or more central processors (CPUs) and/or one or more processing units; either way, device 111 includes a hardware element and/or a hardware processor 306. Indeed, in some implementations, device 111 can include an ASIC (application-specific integrated circuit) and/or an FPGA (field-programmable gate array) specifically configured to implement the functionality of device 111. Hence, device 111 and/or processor 306, may not be necessarily a generic computing device and/or a generic processor and/or a generic component, but a device 111 specifically configured to implement specific functionality, e.g., selecting an antenna (e.g., internal antenna 119, and/or external antenna 109) for communications, determining a location of container 101 and wirelessly providing the location to a remote device through the selected antenna. For example, device 111, together, can specifically include an engine configured to determine a location of container 101 and wirelessly providing the location to a remote device. In some examples, as described above, the processor 306 can compare the Rx signals of internal antenna 119 and external antenna 109, determine whether a switching event has occurred, determine the decrease of the Rx signal strength of the external antenna 109, and/or determine the change of at least one electrical property associated with the external antenna 109.

In some implementations, the memory 308 includes a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 111 as described herein are typically maintained, persistently, in memory 308 and used by device 111 which makes appropriate utilization of volatile storage during the execution of such programming instructions. Those skilled in the art recognize that memory 308 is an example of computer readable media that can store programming instructions executable on device 111. Furthermore, memory 308 is also an example of a memory unit and/or memory module and/or a non-volatile memory. The memory 308 of the device 111 can be used to store a last known location of the container 101, a reference value for Rx signal strengths of external antennas 109, and/or thresholds for detecting the condition of the external antenna 109 as described above.

In particular, the memory 308 can store instructions, which, when processed by the processor 306, enables device 111 to: determine a location of container 101 (e.g. using corresponding internal antenna 119 and/or external antenna 109, RF switch 302, transceiver 304, and/or conductors 122) and wirelessly transmit the location, for example to a remote device. In some implementations, the location of the remove device 111 is transmitted through an internal antenna 119 that is corresponding to an external antenna 109 whose condition has been detected (e.g., the condition indicative of a potential damage or removal of the external antenna 109). The transmission of the location can be broadcast periodically, pushed to the remote device and/or transmitted to the remote device when the condition associated with an external antenna 109 has been detected, and/or when a request for the location is received from the remote device. The remote device can be a component of a system which tracks locations of containers 101. Furthermore, memory 308 can further store one or more identifiers of device 111 and/or container 101, and device 111 can transmit the one or more identifiers with the location.

The one or more transceivers 304, RF switch 302, one or more internal antennas 119, and one or more external antennas 109 can together form a communication interface implemented as one or more radios and/or connectors and/or network adaptors, configured to communicate wirelessly one or more communication networks and/or location determining networks, including but not limited to any suitable combination of cell-phone networks, cellular network networks (including but not limited to 2G, 2.5G, 3G, 4G+ such as UMTS (Universal Mobile Telecommunications System), GSM (Global System for Mobile Communications), CDMA (Code division multiple access), FDD (frequency division duplexing), LTE (Long Term Evolution). TDD (time division duplexing), TDD-LTE (TDD-Long Term Evolution), TD-SCDMA (Time Division Synchronous Code Division Multiple Access) and the like, wireless data, WLAN (wireless local area network) networks, WiFi networks, WiMax networks, packet based networks, the Internet, analog networks, the PSTN (public switched telephone network), access points, GPS networks, GLONASS networks, and the like, and/or a combination. In particular, the communication interface can communicate with a location determining network (e.g. a GPS and/or a GLONASS network, and the like) and a communication network (e.g. a cellular network, a WiFi network, a WLAN, and the like).

However, while a location of container 101 can be determined using a GPS and/or a GLONASS network, in other implementations a location of container 101 can be determined using triangulation techniques (e.g. using one or more of a cellular network, a WiFi network, a WLAN, and the like); in these implementations, the internal antenna 119, external antenna 109 and/or other parts of the device 111 can be configured to communicate with only one or more communication networks and not a location determining network.

Hence, the location of container 101 as determined by device 111 can include, but is not limited to, GPS coordinates, GLONASS coordinates, longitude/latitude, triangulations coordinates, and/or relative coordinates (e.g. relative to a local environment in which container 101 is placed, such as a ship, a warehouse, a shipping yard, and the like).

While not depicted in FIG. 3, device 111 can further include a power source, including but not limited to a battery and/or a power pack, and/or a connection to an external power supply, or any other suitable power source, as well as a housing and the like. For example, container 101 can include one or more batteries and/or power packs mounted within chassis 103 separate from device 111, and device 111 can be coupled to the one or more batteries and/or power packs, using any suitable combination of connectors and/or cables, to power components thereof.

While not depicted in FIG. 3, device 111 can further include one or more input devices, a display device, a microphone and/or a speaker.

While not depicted in FIG. 3, device 111 can include at least one input device generally configured to receive input data, and can include any suitable combination of input devices, including but not limited to a keyboard, a keypad, a pointing device, a mouse, a track wheel, a trackball, a touchpad, a touch screen and the like. Other suitable input devices are within the scope of present implementations.

While not depicted in FIG. 3, device 111 can include a door sensor, as described below in reference to FIG. 4A.

Furthermore, a housing of device 111 can be non-conducting such that electrical coupling between the external antenna 109 and RF switch 302 occurs using components of conductors 122 and not via the housing.

FIG. 4A illustrates an example device 111 with a door sensor. The device 111 can be any one of devices 111 of FIGS. 1A-3. As noted above in reference to FIG. 1C, a door sensor or a part of a door sensor (e.g., a magnetometer 402) can be located within the device 111. The device 111 can be located near a magnet (e.g., the magnet 123 of FIG. 1C) that is placed near a hinge 124 of the door 105. The door sensor or a part of the door sensor (e.g., a magnetometer 402) can be located inside the internal assembly 110 or the external assembly 120 of the device 111. It is to be understood that other sensor technologies for door detection can be employed as well.

FIG. 4B illustrates an example location of the external assembly 120 of the device 111. The device 111 can be any one of devices 111 of FIGS. 1A-4A. The container 101 can include a power device (e.g., a solar panel 404), which can be installed on an external surface of the container 101 (e.g., the external surface 107 of the door 105). The external assembly 120 of the device 111 can be wrapped around the solar panel 404, e.g., in a rectangular frame around the solar panel 404, as illustrated in FIG. 4B.

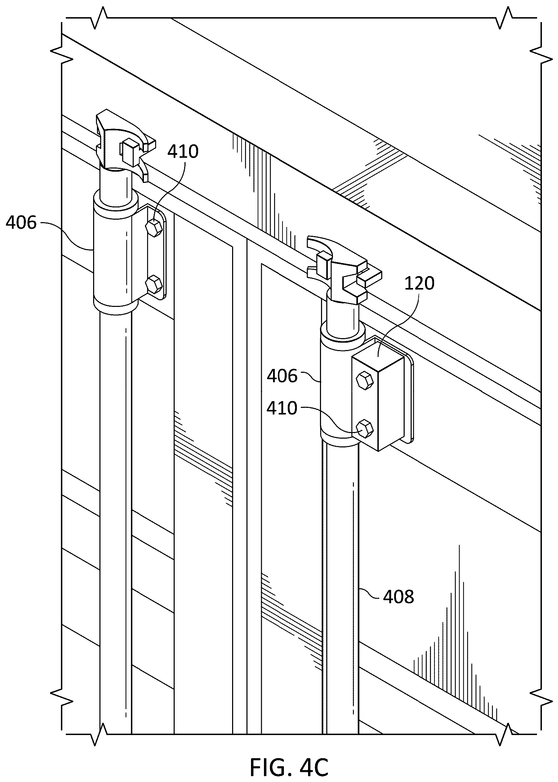

FIG. 4C illustrates another example location of the external assembly 120 of the device 111. The device 111 can be any one of devices 111 of FIGS. 1A-4A. As illustrated, the external assembly 120 can be mounted using the existing screws 410 on a metal flange 406 that is used to hold a circular bar 408. The external assembly 120 can be wrapped on metal flange 406 and/or on the circular bar 408, as illustrated in FIG. 4C.

It is to be understood that the locations of the device 111 described above is not intended to be exhaustive. Other suitable locations of the device 111 can also be considered for deployment.

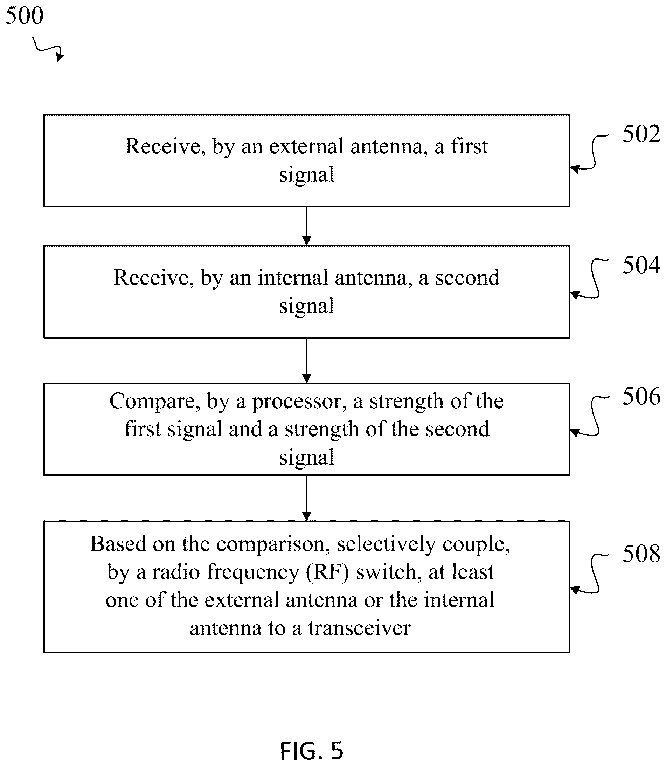

FIG. 5 is a flow chart of an example process to operate a device. The device can be, e.g., any one of the devices 111 of FIGS. 1-4C.

At step 502, a first signal is received by an external antenna of the device. The external antenna can be, e.g., the external antenna 109 of FIGS. 1-4C.

At step 504, a second signal is received by an internal antenna of the device. The internal antenna can be, e.g., the internal antenna 119 of FIGS. 1-4C.

At step 506, a strength of the first signal and a strength of the second signal is compared by a processor. The processor can be, e.g., the processor 306 of FIG. 3A.

At step 508, based on the comparison, at least one of the external antenna or the internal antenna is selectively coupled to a transceiver by a radio frequency (RF) switch. The RF switch can be, e.g., the RF switch 302 of FIG. 3. The transceiver can be, e.g., the transceiver 304 of FIG. 3.

In some implementations, the method includes detecting a condition associated with the external antenna; and in response to a detection of the condition, obtaining a location of the internal antenna, and transmitting an output signal indicative of the location of the internal antenna to a remote device through the internal antenna, as described above in reference to FIG. 3.

In some implementations, detecting the condition associated with the external antenna includes detecting at least one of: a switching event that the RF switch has switched from the external antenna to the internal antenna, a decrease in a strength of a first signal received by the external antenna, or a change in at least one electrical property associated with the external antenna, as described above in reference to FIG. 3. The at least one electrical property includes at least one of impedance, power, voltage or current.

Described implementations of the subject matter can include one or more features, alone or in combination.

For example, in a first implementation, a device, comprising: an external assembly comprising an external antenna; and an internal assembly, comprising: an internal antenna; a transceiver; and a radio frequency (RF) switch coupled to the transceiver, the internal antenna and the external antenna, wherein the RF switch is configured to selectively couple at least one of the external antenna or the internal antenna to the transceiver, and wherein the external antenna is coupled to the RF switch through at least one conductor.

The foregoing and other described implementations can each, optionally, include one or more of the following features:
A first feature, combinable with any of the following features, wherein the external antenna is configured to be installed on an external surface of a container, and the internal antenna is configured to be installed on an internal surface of the container.

A second feature, combinable with any of the previous or following features, wherein the external antenna is configured to be installed on an external surface of a door of the container, the internal antenna is configured to be installed on an internal surface of the door of the container, and the at least one conductor extends through the door of the container.

A third feature, combinable with any of the previous or following features, wherein the device is configured to determine a strength of a first signal received by the external antenna and a strength of a second signal received by the internal antenna, and wherein the RF switch is configured to selectively couple at least one of the external antenna or the internal antenna to the transceiver based on the strength of the first signal and the strength of the second signal.

A fourth feature, combinable with any of the previous or following features, wherein to determine the strength of the first signal and the strength of the second signal, the device is configured to measure at least one of received signal strength indicator (RSSI) value or global positioning system signal-to-noise ratio (GPS SNR) value for each of the first signal and the second signal.

A fifth feature, combinable with any of the previous or following features, wherein the device is further configured to compare the strength of the first signal and the strength of the second signal, and wherein the RF switch is configured to: couple the external antenna to the transceiver responsive to the strength of the first signal received by the external antenna being greater than the strength of the second signal received by the internal antenna, and couple the internal antenna to the transceiver responsive to the strength of the second signal received by the internal antenna being greater than the strength of the first signal received by the external antenna.

A sixth feature, combinable with any of the previous or following features, wherein the internal antenna and the external antenna are configured to transmit and receive a same set of frequencies.

A seventh feature, combinable with any of the previous or following features, wherein at least one of the internal antenna or the external antenna comprises at least one of a cellular antenna, a WiFi antenna, a Bluetooth antenna, or a GPS antenna.

An eighth feature, combinable with any of the previous or following features, wherein the internal antenna is a first internal antenna, and the external antenna is a first external antenna, wherein the external assembly comprises a plurality of external antennas associated with a plurality of radio access technologies (RATs), the plurality of external antennas including the first external antenna associated with a first RAT of the plurality of RATs and a second external antenna associated with a second RAT of the plurality of RATs, and wherein the internal assembly comprises a plurality of internal antennas associated with the plurality of RATs, the plurality of internal antennas including the first internal antenna associated with the first RAT and a second internal antenna associated with the second RAT.

A ninth feature, combinable with any of the previous or following features, wherein the device is configured to: detect a condition associated with the external antenna; and in response to a detection of the condition, obtain a location of the device and transmit an output signal indicative of the location of the device to a remote device through the internal antenna.

A tenth feature, combinable with any of the previous or following features, wherein to obtain the location of the device, the device is configured to perform an operation, the operation comprising at least one of: obtaining a current location of the device by receiving a signal from a global positioning system (GPS) satellite through the internal antenna, or retrieving a last known location of the device stored in a memory of the device.

An eleventh feature, combinable with any of the previous or following features, wherein the output signal is further indicative of the condition to a remote device through the internal antenna.

A twelfth feature, combinable with any of the previous or following features, wherein to detect the condition associated with the external antenna, the device is configured to detect at least one of: a switching event that the RF switch has switched from the external antenna to the internal antenna, a decrease in a strength of a first signal received by the external antenna, or a change in at least one electrical property associated with the external antenna, the at least one electrical property comprising at least one of impedance, power, voltage or current.

A thirteenth feature, combinable with any of the previous or following features, wherein the switching event is a first switching event, and the device is further configured to: (i) detect a second switching event that occurs within a predetermined time period after the first switching event, the second switching event being that the RF switch has switched from the external antenna to the internal antenna; and (ii) in response to a detection of the second switching event, transmit a third output signal indicative of the second switching event.

A fourteenth feature, combinable with any of the previous or following features, wherein the at least one conductor comprises at least one of: a first conductor configured to convey RF signals between the external antenna and the internal assembly, or a second conductor configured to couple the external antenna to a ground voltage.

A fifteenth feature, combinable with any of the previous or following features, wherein the internal assembly comprises at least one conductive spring coupled to the RF switch, and the at least one conductor is coupled to the RF switch through the at least one conductive spring.

A sixteenth feature, combinable with any of the previous or following features, wherein the external assembly is located on a portion of the external surface that is adjacent to an edge of the door of the container, and the internal assembly is located on a corresponding portion of the internal surface that is adjacent to the edge of the door of the container.

In a second implementation, a shipping container, comprising: a chassis; a door moveably mounted to the chassis, the door having an external surface and an internal surface; and a device, comprising: an external assembly located on the external surface of the door and comprising an external antenna; and an internal assembly located on the internal surface of the door, comprising: an internal antenna; a transceiver; and a radio frequency (RF) switch coupled to the transceiver, the internal antenna and the external antenna, wherein the RF switch is configured to selectively couple at least one of the external antenna or the internal antenna to the transceiver, and wherein the external antenna is coupled to the RF switch through at least one conductor that is extending through the door.

The foregoing and other described implementations can each, optionally, include one or more of the following features:
A first feature, combinable with any of the following features, wherein the device is configured to determine a strength of a first signal received by the external antenna and a strength of a second signal received by the internal antenna, and wherein the RF switch is configured to selectively couple at least one of the external antenna or the internal antenna to the transceiver based on the strength of the first signal and the strength of the second signal.

A second feature, combinable with any of the following features, wherein to determine the strength of the first signal and the strength of the second signal, the device is configured to measure at least one of received signal strength indicator (RSSI) value or global positioning system signal-to-noise ratio (GPS SNR) value for each of the first signal and the second signal.

A third feature, combinable with any of the following features, wherein the internal antenna and the external antenna are configured to transmit and receive a same set of frequencies.

A fourth feature, combinable with any of the following features, wherein the device is configured to: detect a condition associated with the external antenna; and in response to a detection of the condition, obtain a location of the device and transmit an output signal indicative of the location of the device to a remote device through the internal antenna.

A fifth feature, combinable with any of the following features, wherein the output signal is further indicative of the condition to a remote device through the internal antenna.

A sixth feature, combinable with any of the following features, wherein to detect the condition associated with the external antenna, the device is configured to detect at least one of: a switching event that the RF switch has switched from the external antenna to the internal antenna, a decrease in a strength of a first signal received by the external antenna, or a change in at least one electrical property associated with the external antenna, the at least one electrical property comprising at least one of impedance, power, voltage or current.

In a third implementation, a method, comprising: receiving, by an external antenna of a device, a first signal; receiving, by an internal antenna of the device, a second signal; comparing, by a processor, a strength of the first signal and a strength of the second signal; and based on the comparison, selectively coupling, by a radio frequency (RF) switch of the device, at least one of the external antenna or the internal antenna to a transceiver of the device.

The foregoing and other described implementations can each, optionally, include one or more of the following features:
A first feature, combinable with any of the following features, wherein the method includes detecting a condition associated with the external antenna; and in response to a detection of the condition, obtaining a location of the internal antenna, and transmitting an output signal indicative of the location of the internal antenna to a remote device through the internal antenna.

A second feature, combinable with any of the previous or following features, wherein detecting the condition associated with the external antenna comprises detecting at least one of: a switching event that the RF switch has switched from the external antenna to the internal antenna, a decrease in a strength of a first signal received by the external antenna, or a change in at least one electrical property associated with the external antenna, the at least one electrical property comprising at least one of impedance, power, voltage or current.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

The terminology used in the description of the various embodiments described herein is for the purpose of describing particular implementations only and is not intended to be limiting. As used in the description of the various described implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed terms. For example, the term "A and/or B" means that either option A, option B, or both options A and B are possible, where A and B may be singular or plural.

## Claims

1. A device, comprising:
an external assembly comprising an external antenna; and
an internal assembly, comprising:
an internal antenna;
a transceiver; and
a radio frequency (RF) switch coupled to the transceiver, the internal antenna and the external antenna,
wherein the RF switch is configured to selectively couple at least one of the external antenna or the internal antenna to the transceiver, and
wherein the external antenna is coupled to the RF switch through at least one conductor.

2. The device of claim 1, wherein the external antenna is configured to be installed on an external surface of a container, and the internal antenna is configured to be installed on an internal surface of the container; and/or
wherein at least one of the external antenna or the internal antenna comprises a multiband antenna.

3. The device of claim 1 or 2, wherein the device is configured to determine a strength of a first signal received by the external antenna and a strength of a second signal received by the internal antenna, and
wherein the RF switch is configured to selectively couple at least one of the external antenna or the internal antenna to the transceiver based on the strength of the first signal and the strength of the second signal.

4. The device of claim 3, wherein to determine the strength of the first signal and the strength of the second signal, the device is configured to measure at least one of received signal strength indicator (RSSI) value or global positioning system signal-to-noise ratio (GPS SNR) value for each of the first signal and the second signal.

5. The device of claim 3,
wherein the device is further configured to compare the strength of the first signal and the strength of the second signal, and
wherein the RF switch is configured to:
couple the external antenna to the transceiver responsive to the strength of the first signal received by the external antenna being greater than the strength of the second signal received by the internal antenna, and
couple the internal antenna to the transceiver responsive to the strength of the second signal received by the internal antenna being greater than the strength of the first signal received by the external antenna.

6. The device of any one of claims 1 to 5 , wherein the internal antenna and the external antenna are configured to transmit and receive a same set of frequencies.

7. The device of any one of claims 1 to 6 ,
wherein the internal antenna is a first internal antenna, and the external antenna is a first external antenna,
wherein the external assembly comprises a plurality of external antennas associated with a plurality of radio access technologies (RATs), the plurality of external antennas including the first external antenna associated with a first RAT of the plurality of RATs and a second external antenna associated with a second RAT of the plurality of RATs, and
wherein the internal assembly comprises a plurality of internal antennas associated with the plurality of RATs, the plurality of internal antennas including the first internal antenna associated with the first RAT and a second internal antenna associated with the second RAT.

8. The device of any one of claims 1 to 7, wherein the device is configured to:
detect a condition associated with the external antenna; and
in response to a detection of the condition, obtain a location of the device and transmit an output signal indicative of the location of the device to a remote device through the internal antenna.

9. The device of claim 8, wherein to obtain the location of the device, the device is configured to perform an operation, the operation comprising at least one of:
obtaining a current location of the device by receiving a signal from a global positioning system (GPS) satellite through the internal antenna, or
retrieving a last known location of the device stored in a memory of the device.

10. The device of claim 8, wherein to detect the condition associated with the external antenna, the device is configured to detect at least one of:
a switching event that the RF switch has switched from the external antenna to the internal antenna,
a decrease in a strength of a first signal received by the external antenna, or
a change in at least one electrical property associated with the external antenna, the at least one electrical property comprising at least one of impedance, power, voltage or current.

11. A shipping container, comprising:
a chassis;
a door moveably mounted to the chassis, the door having an external surface and an internal surface; and
a device according to any one of claims 1 to 10,
wherein the external assembly is located on the external surface of the door;
wherein the internal is assembly located on the internal surface of the door; and
wherein the at least one conductor is extending through the door.

12. A method, comprising:
receiving, by an external antenna of a device, a first signal;
receiving, by an internal antenna of the device, a second signal;
comparing, by a processor, a strength of the first signal and a strength of the second signal; and
based on the comparison, selectively coupling, by a radio frequency (RF) switch of the device, at least one of the external antenna or the internal antenna to a transceiver of the device.

13. The method of claim 12, comprising:
detecting a condition associated with the external antenna; and
in response to a detection of the condition,
obtaining a location of the internal antenna, and
transmitting an output signal indicative of the location of the internal antenna to a remote device through the internal antenna.

14. The method of claim 12 or 13, wherein detecting the condition associated with the external antenna comprises detecting at least one of:
a switching event that the RF switch has switched from the external antenna to the internal antenna,
a decrease in a strength of a first signal received by the external antenna, or
a change in at least one electrical property associated with the external antenna, the at least one electrical property comprising at least one of impedance, power, voltage or current.

15. A non-transitory computer-readable medium having instructions stored thereon that, when executed by a computing device, cause the computing device to perform the method according to any one of claims 12 to 14.
